# EUROPÄISCHE PATENTSCHRIFT

(11) **EP 3 381 325 B1**
(45) Veröffentlichungstag und Bekanntmachung des Hinweises auf die Patenterteilung: **23.06.2021**
(21) Anmeldenummer: 18160661.7
(22) Anmeldetag: 08.03.2018
(51) Int. Cl.: A47B 88/49, A47B 88/50

(54) **AUSZIEHVORRICHTUNG FÜR EIN AUS EINEM MÖBELKORPUS AUSZIEHBARES MÖBELTEIL**
PULL-OUT GUIDE FOR A FURNITURE PART WHICH CAN BE PULLED OUT OF A BASIC FURNITURE STRUCTURE
GUIDE D'EXTRACTION POUR UNE PIÈCE DE MEUBLE POUVANT ÊTRE TIRÉE D'UNE STRUCTURE DE MEUBLE DE BASE

(30) Priorität: 31.03.2017 AT 1372017
(43) Veröffentlichungstag der Anmeldung: 03.10.2018
(73) Patentinhaber: Fulterer AG & Co KG, 6890 Lustenau (AT)
(72) Erfinder: Ott, Dominic, 9492 Eschen (LI)
(74) Vertreter: Hofmann, Ralf U.

(56) Entgegenhaltungen:
- WO-A2-2010/129303
- DE-A1- 4 307 911
- DE-A1- 10 201 242
- DE-C1- 19 502 526
- US-A1- 2008 111 382

## Beschreibung

Die Erfindung bezieht sich auf eine Ausziehführung für ein aus einem Möbelkorpus ausziehbares Möbelteil, umfassend eine am Möbelkorpus anbringbare Korpusschiene, eine am ausziehbaren Möbelteil anbringbare Ausziehschiene, welche ausgehend von einer vollständig eingeschobenen Einschubposition in eine Ausziehrichtung in eine vollständig ausgezogene Ausziehposition ausziehbar ist und entgegen der Ausziehrichtung von der Ausziehposition in die Einschubposition einschiebbar ist, und ein Riegelteil zum Sperren des Ausziehens der Ausziehschiene ausgehend von der Einschubposition der Ausziehschiene und des Einschiebens der Ausziehschiene ausgehend von der Ausziehposition der Ausziehschiene, wobei das Riegelteil mittels eines Betätigungselements von einer Sperrstellung, in welcher das Riegelteil das Ausziehen der Ausziehschiene ausgehend von der Einschubposition der Ausziehschiene und das Einschieben der Ausziehschiene ausgehend von der Ausziehposition der Ausziehschiene sperrt, in eine Freigabestellung verstellbar ist, in welcher das Riegelteil das Ausziehen der Ausziehschiene ausgehend von der Einschubposition der Ausziehschiene und das Einschieben der Ausziehschiene ausgehend von der Ausziehposition der Ausziehschiene freigibt, und das Riegelteil in der Einschubposition der Ausziehschiene und in der Ausziehposition der Ausziehschiene von einem Federelement in der Sperrstellung gehalten ist und durch eine Betätigung des Betätigungselements gegen die Federkraft des Federelements von der Sperrstellung in die Freigabestellung verstellbar ist und das Riegelteil beim Ausziehen und Einschieben der Ausziehschiene entlang einer Laufbahn der Korpusschiene gleitet oder abrollt, wobei das Riegelteil vom Federelement an die Laufbahn angedrückt ist.

Bei mittels einer Ausziehführung aus einem Möbelkorpus ausziehbaren Möbelteilen, beispielsweise Schubladen, kann eine Verriegelung des ausziehbaren Möbelteils in seiner vollständig eingeschobenen Position und/oder in seiner vollständig ausgezogenen Position gewünscht sein, um ein ungewolltes Ausfahren bzw. Einfahren des ausziehbaren Möbelteils zu verhindern. Eine solche Verriegelung kann insbesondere bei auf Rädern verfahrbaren Möbelstücken, wie einem verfahrbaren Werkzeugkasten, oder bei in Fahrzeugen angeordneten Möbelstücken gewünscht sein.

Eine Verriegelungsvorrichtung zum Sperren des ausziehbaren Möbelteils in seiner vollständig eingeschobenen Stellung sowie in seiner vollständig ausgezogenen Stellung geht beispielsweise aus der EP 1 826 343 B1 hervor. Ein Sperrhebel ist verschwenkbar an einer Seitenwand der Schublade angebracht und durch einen an der Schubladenfront angeordneten verschwenkbaren Griff zwischen einer Sperrstellung und einer Freigabestellung verschwenkbar. Im eingeschobenen Zustand der Schublade greift in der Sperrstellung des Sperrhebels ein korpusfest angeordneter Bolzen in eine Rastausnehmung des Sperrhebels ein. Im ausgezogenen Zustand der Schublade wirkt in der Sperrstellung ein Anschlag am hinteren Ende des Sperrhebels mit einem korpusfest angeordneten Anschlag zusammen. Nachteilig an dieser Vorrichtung ist u.a. die relativ aufwendige Ausbildung und Montage.

Aus der DE 10 201 242 A1 geht eine Blockiervorrichtung hervor, mittels der die Schublade in beliebigen Ausziehstellungen blockiert werden kann. Es ist hierzu an der Korpusinnenseite eine Rasterprofilschiene vorgesehen, mit welcher ein Riegelteil zusammenwirkt, welches von einem Federelement in Eingriff mit der Rasterprofilschiene gehalten wird. Soll die Stellung der Schublade verändert werden, so wird ein Betätigungselement betätigt, welches über ein Zugband das Riegelteil gegen die Kraft des Federelements aus der Verzahnung der Rasterprofilschiene herauszieht.

Aus der DE 195 02 526 C1 und DE 43 07 911 A1 gehen Ausziehführungen der eingangs genannten Art hervor. Jeweils sind an der Ausziehschiene in Bereichen beidseitig neben dem ausziehbaren Möbelteil Riegelteile verschwenkbar gelagert. Bei der Ausziehführung gemäß der DE 195 02 526 C1 liegt die Schwenkachse parallel zur Ausziehrichtung und die Verschwenkung des Riegelteils erfolgt mittels eines Bowdenzugs. Bei der Ausziehführung gemäß der DE 43 07 911 A1 liegt die Schwenkachse des Riegelteils rechtwinkelig zur Ausziehrichtung und die Verschwenkung erfolgt mittels eines verschwenkbaren Betätigungshebels.

Weitere Ausziehführungen, bei denen zumindest eine Stellung der Ausziehführung blockiert werden kann, gehen aus der US 2008/0111382 A1 und WO 2010/129303 A2 hervor. Diese Schriften stellen technologischen Hintergrund zur gegenständlichen Erfindung dar.

Aufgabe der Erfindung ist es eine vorteilhafte Ausziehführung der eingangs genannten Art bereitzustellen, bei der mittels eines Riegelteils das Ausziehen der Ausziehschiene ausgehend von der Einschubposition der Ausziehschiene und das Einschieben der Ausziehschiene ausgehend von der Ausziehposition der Ausziehschiene gesperrt werden kann. Erfindungsgemäß gelingt dies durch eine Ausziehführung mit den Merkmalen des Anspruchs 1.

Bei der Ausziehführung der Erfindung ist vorgesehen, dass das Riegelteil von einem Basisteil zwischen der Sperrstellung und der Freigabestellung parallel zu einer Verschieberichtung verschiebbar geführt ist, wobei das Riegelteil in der Einschubposition der Ausziehschiene und in der Ausziehposition der Ausziehschiene vom Federelement in der Sperrstellung gehalten ist und durch eine Betätigung des Betätigungselements gegen die Federkraft des Federelements von der Sperrstellung in die Freigabestellung in die Verschieberichtung verschiebbar ist.

Es wird hierbei eine einfache, stabile und platzsparende Ausbildung ermöglicht. Speziell wird ein Einbau an der Unterseite eines ausziehbaren Möbelteils ermöglicht, wobei die Verschieberichtung horizontal liegt.

Außerdem kann für die Betätigung des Riegelteils eine flexibel anpassbare Ausbildung ermöglicht werden, wie weiter unten genauer erläutert.

Beim Ausziehen oder Einschieben der Ausziehschiene gleitet das Riegelteil entlang einer Laufbahn der Korpusschiene oder rollt entlang dieser ab. Hierbei wird das Riegelteil vom Federelement an die Laufbahn angedrückt. Somit wird die Freigabestellung des Riegelteils beim Ausziehen und Einschieben der Ausziehschiene durch das Zusammenwirken des Riegelteils mit der Laufbahn beibehalten. Es muss daher für das Riegelteil keine Rastmechanismus vorgesehen werden, um dieses nach der Verstellung des Riegelteils durch das Betätigungselement von der Sperrstellung in die Freigabestellung während des Ausziehens oder Einschiebens der Ausziehschiene in der Freigabestellung zu halten. Wenn beim Ausziehen und Einschieben der Ausziehschiene die Endposition der Ausziehschiene (Ausziehposition und Einschubposition) erreicht wird, in welcher eine Verriegelung der Ausziehschiene vorgesehen ist, so gelangt das Riegelteil über das Ende der Laufbahn hinaus und wird vom Federelement selbsttätig in seine Sperrstellung verschoben. Das Sperren der Ausziehschiene bei Erreichen der Einschubposition und Ausziehposition kann somit automatisch erfolgen, und zwar vorteilhafterweise ohne dass hierbei von der Ausziehschiene eine der Verschiebung der Ausziehschiene entgegenwirkende Kraft aufgebracht werden müsste, um das Riegelteil von seiner Freigabestellung in seine Sperrstellung zu bringen.

Die Anschlagfläche, mit welcher das Riegelteil in der Sperrstellung zusammenwirkt, um das Ausziehen bzw. Einschieben der Ausziehschiene zu sperren, ist vorzugsweise an der Korpusschiene angeordnet. Um das Ausziehen der Ausziehschiene ausgehend von der Einschubposition der Ausziehschiene zu sperren, weist die Anschlagfläche in die der Ausziehrichtung entgegengesetzte Richtung. Um das Einschieben der Ausziehschiene ausgehend von ihrer Ausziehposition zu sperren, weist die Anschlagfläche in die Ausziehrichtung. Durch die Anordnung der Anschlagfläche an der Korpusschiene ist es nicht erforderlich, am Möbelkorpus ein separates, die Anschlagfläche aufweisendes Anschlagteil zu montieren.

Eine Anordnung des Basisteils der Riegeleinheit an der Ausziehschiene kann in unterschiedlicher Weise erfolgen, beispielsweise durch Befestigungsschrauben oder beispielsweise durch Verschweißen, wodurch eine einstückige Ausbildung vorliegen würde.

Eine erste Alternative der Erfindung sieht vor, dass das Betätigungselement über ein Zugseil mit dem Riegelteil verbunden ist. Es wird dadurch eine flexible Positionierung des Betätigungselements ermöglicht. Ein von einer Spannfeder beaufschlagtes Spannteil wirkt auf das Zugseil ein, um dieses gespannt zu halten. Das Zugseil bleibt dadurch auch gespannt, wenn beim Ausziehen und Einschieben der Ausziehschiene das Riegelteil entlang der Laufbahn der Korpusschiene gleitet oder abrollt (und keine Betätigung des Betätigungselements durch den Benutzer erfolgt).

In einer zweiten Alternative der Erfindung ist das

Betätigungselement über eine axial verschiebbare Betätigungsstange und mindestens ein Getriebeglied mit dem Riegelteil verbunden. Beim Betätigungselement kann es sich dann beispielsweise um einen Knopf handeln, der am vom Sperrteil abgelegenen Ende der Betätigungsstange angeordnet ist. Die Verschiebung des Riegelteils von seiner Sperrstellung in seine Freigabestellung kann durch ein Eindrücken des Betätigungselements und damit der Betätigungsstange erfolgen. Aber auch eine Ausbildung bei der dies durch ein Herausziehen des Betätigungselements und damit der Betätigungsstange erreicht wird, ist denkbar und möglich. Ein Eindrücken oder Herausziehen der Betätigungsstange könnte auch mittels eines separaten, verschiebbar oder verschwenkbar gelagerten, Betätigungselements erfolgen, wobei dieses Betätigungselement direkt oder über mindestens ein Getriebeglied mit der Betätigungsstange zusammenwirkt.

Das zwischen der Betätigungsstange und dem Riegelteil liegende mindestens eine Getriebeglied kann in unterschiedlicher Weise ausgebildet sein. Beispielsweise kann es sich um einen zwischen diesen beiden Teilen liegenden, schräg zur Verschieberichtung des Riegelteils stehenden Betätigungsarm handeln, der sowohl gegenüber der Betätigungsstange als auch gegenüber dem Riegelteil verschwenkbar ist. Auch ein an der Betätigungsstange angebrachtes (evtl. einstückig mit dieser ausgebildetes) oder von der Betätigungsstange betätigtes Keilelement könnte beispielsweise vorgesehen sein.

Durch die erfindungsgemäße Ausbildung kann auch eine einfache wahlweise Ausrüstbarkeit mit einem Zugseil oder einer Betätigungsstange als Übertragungsglied ermöglicht werden.

Weitere Vorteile und Einzelheiten der Erfindung werden im Folgenden anhand der beiliegenden Zeichnung erläutert. In dieser zeigen:
Fig. 1 eine Seitenansicht eines Teils eines ausziehbaren Möbelteils mit den auf der einen Seite des ausziehbaren Möbelteils daran angebrachten Schienen der Ausziehführung, gemäß einem ersten Ausführungsbeispiel der Erfindung, in der vollständig eingeschobenen Einschubposition der Ausziehschiene der Ausziehführung;
Fig. 2 eine stirnseitige Ansicht, Blickrichtung A von Fig. 1, wobei auch der Möbelkorpus mit strichlierten Linien angedeutet ist;
Fig. 3 eine Ansicht von unten, Blickrichtung B in Fig. 1;
Fig. 4 ein vergrößertes Detail von Fig. 3;
Fig. 5 eine Schrägsicht von schräg unten;
Fig. 6 ein vergrößertes Detail von Fig. 6;
Fig. 7 bis Fig. 10 Darstellungen entsprechend den Fig. 3-6, wobei das Riegelteil von der Sperrstellung in die Freigabestellung verschoben worden ist;
Fig. 11 bis Fig. 14 Darstellungen entsprechend den Fig. 3-6, in einer Position der Ausziehschiene, die zwischen der Einschubposition und der Ausziehposition liegt;
Fig. 15 bis Fig. 18 Darstellungen entsprechend den Fig. 3-6, in der Ausziehposition der Ausziehschiene, in welcher diese durch das Riegelteil gesperrt ist;
Fig. 19 bis Fig. 22 Darstellungen entsprechend den Fig. 3-6, in der Ausziehposition der Ausziehschiene und mit dem von der Sperrstellung in die Freigabestellung verstellten Riegelteil;
Fig. 23 und 24 eine Seitenansicht und eine Schrägsicht der an der Ausziehschiene angebrachten Riegeleinheit mit einem Endabschnitt des Zugseils;
Fig. 25 und 26 Explosionsdarstellungen der Riegeleinheit und des Endabschnitts des Zugseils aus unterschiedlichen Blickrichtungen;
Fig. 27 bis Fig. 50 Darstellungen entsprechend den Fig. 1 bis 24 für ein zweites Ausführungsbeispiel der Erfindung;
Fig. 51 einen Schnitt entlang der Linie CC von Fig. 49;
Fig. 52 und 53 Explosionsdarstellungen der Riegeleinheit und des Endabschnitts der Betätigungsstange aus verschiedenen Blickrichtungen;
Fig. 54 eine schematische Darstellung in einer Ansicht entsprechend Fig. 12 bzw. Fig. 38 für eine modifizierte Ausführungsform, bei welcher das Riegelteil entlang der Laufbahn abrollt;
Fig. 55 eine Schrägsicht analog Fig. 24 einer modifizierten Riegeleinheit;
Fig. 56 eine Schrägsicht auf die gegenüberliegende (dem ausziehbaren Möbelteil zugewandte) Seite der Riegeleinheit;
Fig. 57 eine Schrägsicht entsprechend Fig. 55, aber im herausgenommenen Zustand des Riegelteils;
Fig. 58 und 59 Explosionsdarstellungen aus unterschiedlichen Blickrichtungen;
Fig. 60 eine Ansicht auf die dem ausziehbaren Möbelkorpus zugewandte Seite der Riegeleinheit;
Fig. 61 einen Schnitt entlang der Linie DD von Fig. 60;
Fig. 62 ein vergrößertes Detail E von Fig. 61;
Fig. 63 einen Schnitt entsprechend Fig. 61, aber im Zustand, welcher beim Gleiten des Riegelteils entlang der Laufbahn während des Ausziehens oder Einschiebens vorliegt;
Fig. 64 ein vergrößertes Detail F von Fig. 63.
Die Figuren weisen unterschiedliche Maßstäbe auf.

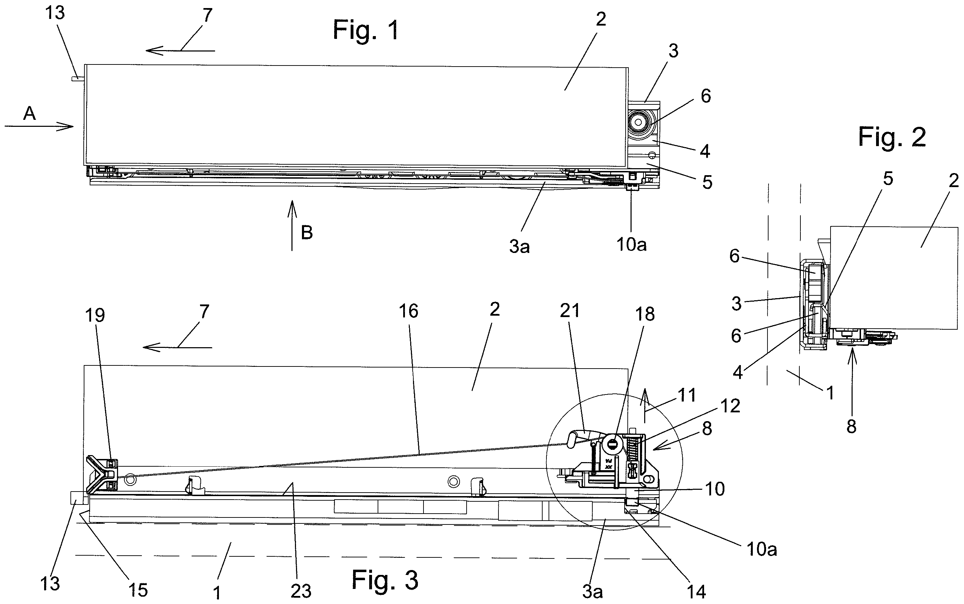

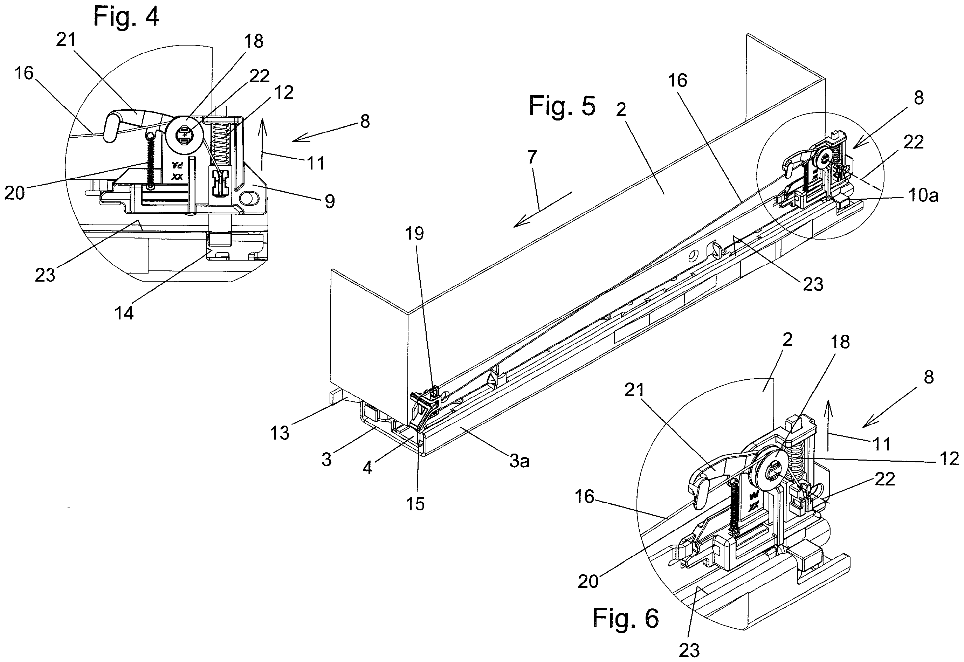

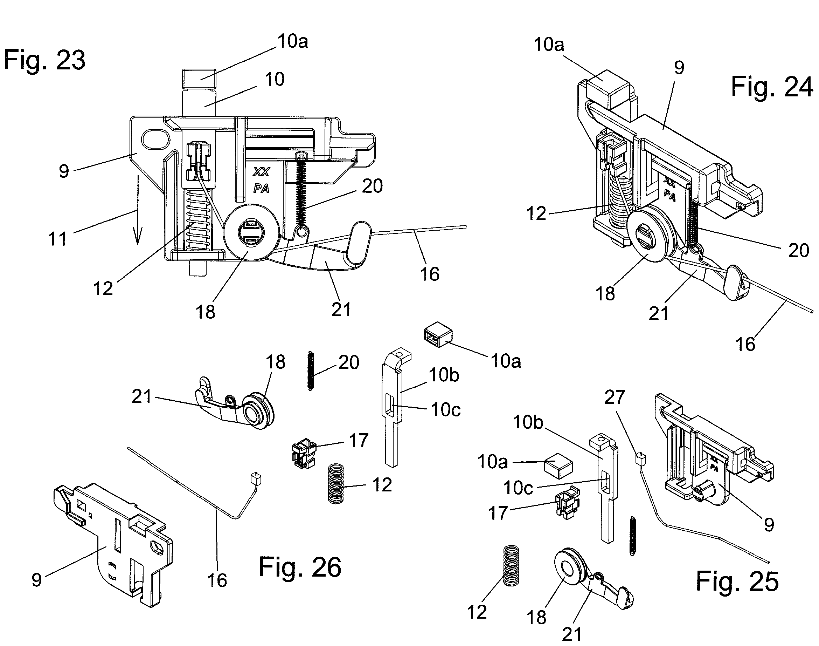

Ein erstes Ausführungsbeispiel einer erfindungsgemäßen Ausziehführung mit einer Riegelvorrichtung zum Sichern des Ausziehens und Einschiebens eines ausziehbaren Möbelteils wird im Folgenden anhand der Figuren 1 bis 26 erläutert. Dargestellt sind in den Fig. 1 bis 22 die auf einer Seite eines ausziehbaren Möbelteils 2 angeordneten Schienen einer Ausziehführung zusammen mit einem Abschnitt des ausziehbaren Möbelteils 2. Der Möbelkorpus 1 ist in den Fig. 2, 3 und 11 durch strichlierte Linien angedeutet. Beim ausziehbaren Möbelteil 2 kann es sich beispielsweise um eine Schublade handeln. Es können mehrere in gleicher Weise verschiebbar geführte ausziehbare Möbelteile im Möbelkorpus 1 angeordnet sein.

Die auf der anderen Seite des ausziehbaren Möbelteils 2 angeordneten Schienen, die in den Figuren nicht dargestellt sind, sind spiegelbildlich ausgebildet.

Im Ausführungsbeispiel umfasst die Ausziehführung eine am Möbelkorpus anzubringende Korpusschiene 3, eine am ausziehbaren Möbelteil 2 anzubringende Ausziehschiene 5 und eine zwischen der Korpusschiene 3 und der Ausziehschiene 5 angeordnete Mittelschiene 4 auf beiden Seiten des ausziehbaren Möbelteils.

Bei der Ausziehführung kann es sich insbesondere um eine Rollen-Ausziehführung handeln, bei welcher die die Schienen 3-5 verschiebbar gegeneinander lagernden Laufrollen 6 um Achsen drehbar gelagert sind, welche an den Schienen bzw. einer der Schienen angebracht sind. Im Ausführungsbeispiel sind alle Laufrollen 6 an der Mittelschiene 4 drehbar gelagert. Es handelt sich um einen Differentialauszug, bei welchem die Mittelschiene 4 und Ausziehschiene 5 synchron laufen, im Gegensatz zu einem Teleskopauszug, bei welchem das Ausziehen der Schienen nacheinander erfolgt. Die Erfindung ist aber ebenso bei anderen Arten von Ausziehführungen einsetzbar, beispielsweise bei anderen Arten von Rollen-Ausziehführungen, wie Rollen-Teleskopauszügen, bei welchen an allen Schienen Laufrollen um Achsen drehbar gelagert sind.

Es könnte sich bei der Ausziehführung aber auch um eine Kugelausziehführung oder um eine Ausziehführung handeln, bei welcher zwischen den Schienen mit Laufrollen bestückte Laufwagen angeordnet sind.

Die Ausziehführung könnte auch nur eine Korpusschiene und eine aus der Korpusschiene ausziehbare Ausziehschiene aufweisen.

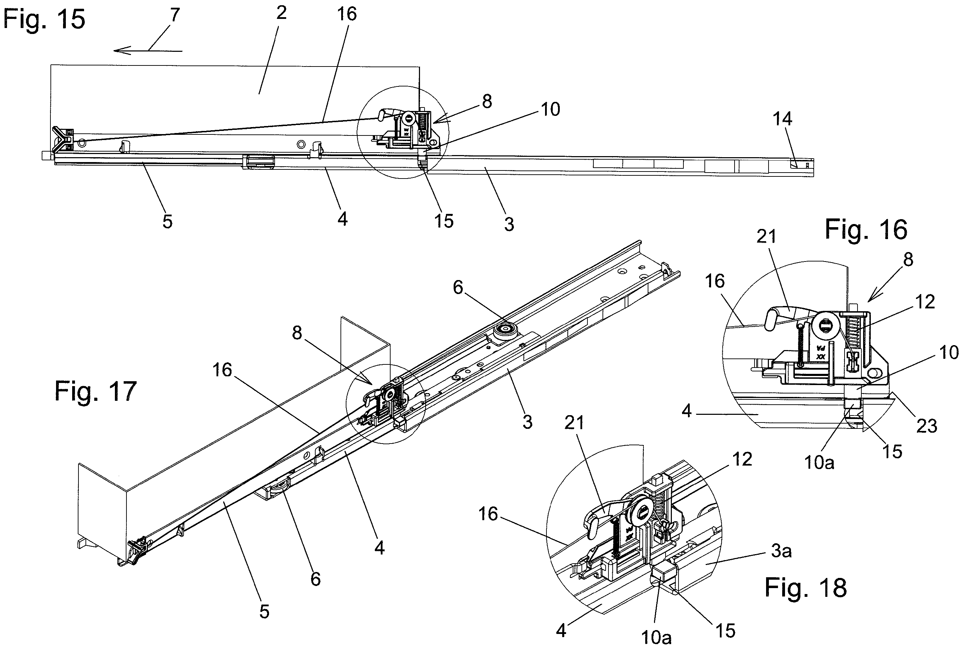

In der vollständig in den Möbelkorpus eingeschobenen Position des ausziehbaren Möbelteils 2 weist die Ausziehschiene 5 eine vollständig in die Korpusschiene 3 (sowie in die Mittelschiene 4) eingeschobene Einschubposition auf (Fig. 1 bis 6). In der maximal aus dem Möbelkorpus 1 ausgezogenen Position des ausziehbaren Möbelteils 2 weist die Ausziehschiene 5 eine maximal aus der Korpusschiene 3 (und aus der Mittelschiene 4) ausgezogene Ausziehposition aus (Fig. 15 - 22). Das Ausziehen des ausziehbaren Möbelteils 2 und damit der Ausziehschiene 5 erfolgt in eine Ausziehrichtung 7. Das Einschieben des ausziehbaren Möbelteils 2 und der Ausziehschiene 5 erfolgt entgegen der Ausziehrichtung 7.

Um die Ausziehschiene 5 in der Einschubposition und in der Ausziehposition zu sperren, ist eine Riegeleinheit 8 vorgesehen, welche ein Basisteil 9 aufweist, das an der Ausziehschiene 5 befestigt ist (Befestigungsschrauben oder -nieten sind in den Figuren der Einfachheit halber nicht dargestellt; es könnte beispielsweise auch ein Verschweißen vorgesehen sein). Am Basisteil 9 ist ein Riegelteil 10 in eine Verschieberichtung 11, die vorzugweise rechtwinkelig zur Ausziehrichtung 7 steht, linear verschiebbar gelagert. Das Riegelteil 10 wird von einem Federelement 12 in eine Sperrstellung beaufschlagt. Ohne eine weiter unten beschriebene Betätigung eines Betätigungselements 13 nimmt das Riegelteil 10 in der Einschubposition und in der Ausziehposition der Ausziehschiene 5 die Sperrstellung ein, in welcher es durch das Federelement 12 gehalten ist (Fig. 1-6, 15-18). In dieser Sperrstellung wirkt das Riegelteil 10 in der Einschubposition der Ausziehschiene 5 mit der ersten Anschlagfläche 14 der Korpusschiene 3 zusammen, in der Ausziehposition der Ausziehschiene 5 wirkt das Riegelteil 10 in seiner Sperrstellung mit der zweiten Anschlagfläche 15 der Korpusschiene 3 zusammen. Die Anschlagflächen 14, 15 liegen vorzugsweise rechtwinkelig zur Ausziehrichtung 7, d.h. ihre Oberflächennormalen sind parallel zur Ausziehrichtung 7 ausgerichtet, wobei die erste Anschlagfläche 14 in eine der Ausziehrichtung 7 entgegengesetzte Richtung weist, d.h. die Oberflächennormale auf die erste Anschlagfläche 14 schließt mit der Ausziehrichtung einen Winkel von 180° ein, und die zweite Anschlagfläche 15 in die Ausziehrichtung ausgerichtet ist, d.h. die Oberflächennormale auf die zweite Anschlagfläche 15 schließt mit der Ausziehrichtung einen Winkel von 0° ein.

Die Verschieberichtung 11 liegt im Montagezustand vorzugsweise horizontal. Insbesondere kann die Riegeleinheit 8 im Montagezustand unterhalb des Bodens des ausziehbaren Möbelteils 2 angeordnet sein, vgl. z.B. Fig. 2.

Im Ausführungsbeispiel wird die erste Anschlagfläche 14 durch eine Abstufung in einem unteren Horizontalschenkel 3a der Korpusschiene ausgebildet. Stattdessen könnte die erste Anschlagfläche 14 auch durch eine Vertiefung im unteren Horizontalschenkel 3a der Korpusschiene 3 ausgebildet werden (d.h. hinter dieser Vertiefung würde der untere Horizontalschenkel 3a wieder eine größere Breite aufweisen) oder an der hinteren Stirnseite des unteren Horizontalschenkels 3a der Korpusschiene 3 liegen. Die zweite Anschlagfläche 15 wird im Ausführungsbeispiel von einer vorderen Stirnfläche des Horizontalschenkels 3a der Korpusschiene 3 gebildet. Stattdessen könnte die zweite Anschlagfläche 15 beispielsweise auch durch eine Abstufung des unteren Horizontalschenkels 3a der Korpusschiene 3 oder durch eine Ausnehmung im unteren Horizontalschenkel 3a der Korpusschiene 3 gebildet werden.

Bei einer anderen Ausbildung der Schienen der Ausziehführung könnten die erste Anschlagfläche 14 und die zweite Anschlagfläche 15 auch durch eine Abstufung oder Ausnehmung in einem anderen Teil der Korpusschiene oder stirnseitig an einem Teil der Korpusschiene angeordnet sein.

Wenn auf die Ausziehschiene 5 ausgehend von ihrer Einschubposition eine in die Ausziehrichtung 7 gerichtete Kraft einwirkt, so blockiert das in seiner Sperrstellung sich befindende Riegelteil 10 durch Anschlag an der ersten Anschlagfläche 14 das Ausziehen der Ausziehschiene 5. Wenn in der Ausziehposition der Ausziehschiene 5 eine entgegen der Ausziehrichtung 7 ausgerichtete Kraft auf die Ausziehschiene 5 einwirkt, so blockiert das in seiner Sperrstellung sich befindende Riegelteil 10 ein Einschieben der Ausziehschiene 5 entgegen der Ausziehrichtung 7 durch Anschlag an der zweiten Anschlagfläche 15.

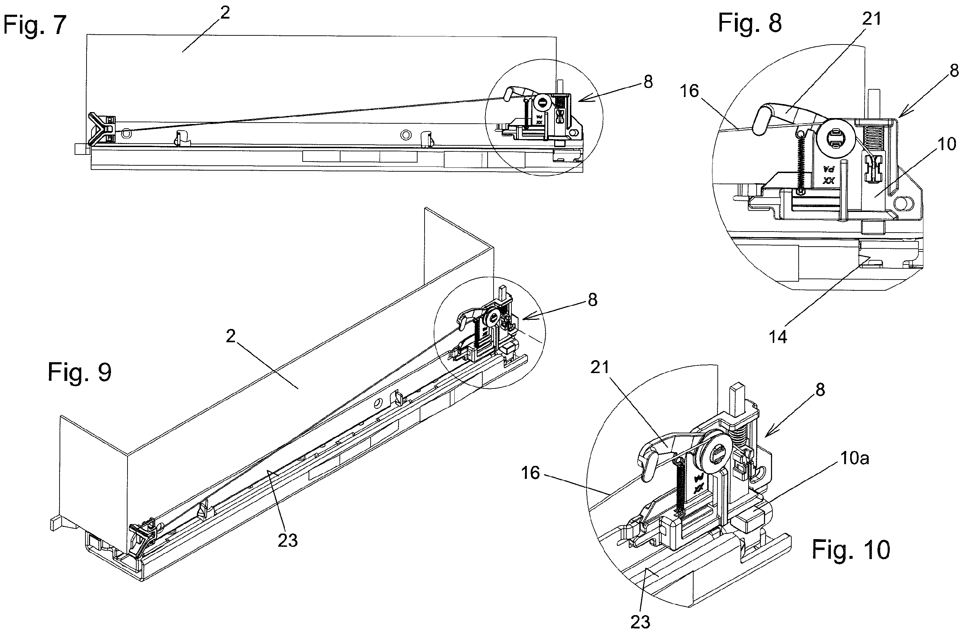

Mit dem Riegelteil 10 ist ein Zugseil 16 verbunden. Durch einen Zug am Zugseil 16 kann das Riegelteil 10 von seiner Sperrstellung gegen die Kraft des Federelements 12 in eine Freigabestellung verschoben werden, in welcher sein Zusammenwirken mit der ersten bzw. zweiten Anschlagfläche 14, 15 aufgehoben ist, vgl. Fig. 7 bis 10 und 19 bis 22. Der Zug am Zugseil 16 erfolgt durch die Betätigung eines Betätigungselements 13 durch einen Benutzer. Das Betätigungselement 13 ist vorzugsweise im Bereich der vorderen Stirnseite des ausziehbaren Möbelteils 2 angeordnet, beispielsweise verschiebbar gelagert. Anstelle eines verschiebbar gelagerten Betätigungselements 13 könnte auch ein verschwenkbar gelagertes Teil vorgesehen sein. Die verschiebbare Lagerung des Betätigungselements 13 ist in den Figuren nicht im Einzelnen dargestellt.

Damit das Riegelteil 10 durch einen Zug am Zugseil 16 gegen die Kraft des Federelements 12 in die Freigabeposition verschoben wird, läuft das Zugseil 16 ausgehend von seiner Anbindung an das Riegelteil 10 in eine Richtung, die mit der Verschieberichtung 11 einen Winkel von weniger als 90°, vorzugsweise weniger als 45° einschließt. Es ist hierzu günstigerweise am Basisteil 9 ein Umlenkteil 18 angeordnet, im Ausführungsbeispiel eine drehbar gelagerte Umlenkrolle. Die Drehachse der Umlenkrolle steht rechtwinkelig zur Ausziehrichtung 7 und rechtwinkelig zur Verschieberichtung 11. Eine Umlenkung des Zugseils 16 könnte auch durch ein am Basisteil 9 angeordnetes Gleitteil erfolgen.

Im Ausführungsbeispiel ist im Bereich des bezogen auf die Ausziehrichtung 7 vorne liegenden Endes der Ausziehschiene 5 eine weitere Umlenkung des Zugseils 16 vorgesehen. Hierzu dient ein an der Ausziehschiene 5 im Bereich von deren bezogen auf die Ausziehrichtung 7 vorderen Ende angebrachtes Umlenkteil 19, welches als Gleitteil ausgebildet ist. Es könnte auch eine Umlenkrolle vorgesehen sein. Ein solches Umlenkteil 19 könnte auch entfallen, wenn beispielsweise das Betätigungselement 13 unten am ausziehbaren Möbelteil 2 angeordnet würde.

Um das Zugseil 16 gespannt zu halten, dient ein von einer Spannfeder 20 beaufschlagtes Spannteil 21. Dieses ist im Ausführungsbeispiel als ein am Basisteil 9 um eine Schwenkachse 22 verschwenkbar gelagerter Hebel ausgebildet. Dieser Hebel ist im Bereich seines freien Endes von der Spannfeder 20 an das Zugseil 16 angedrückt. Die Schwenkachse 22 des Spannteils 21 steht rechtwinkelig zur Ausziehrichtung 7 und rechtwinkelig zur Verschieberichtung 11.

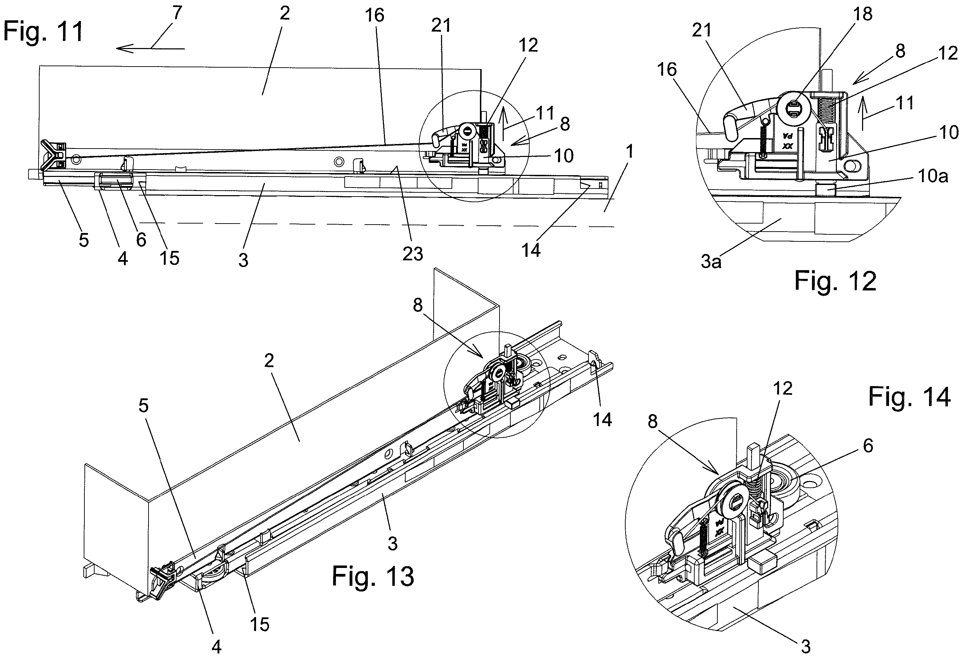

Um ausgehend von der vollständig in den Möbelkorpus 1 eingeschobenen Position des ausziehbaren Möbelteils 2 dieses in die Ausziehrichtung 7 auszuziehen wird das Riegelteil 10 durch Betätigung des Betätigungselements 13 von der Sperrstellung in die Freigabestellung verschoben, in welcher das Riegelteil 10 außer Eingriff mit der Anschlagfläche 14 gebracht ist, vgl. Fig. 7-10. In der Folge kann das ausziehbare Möbelteil 2 in die Ausziehrichtung 7 ausgezogen werden und mit dem ausziehbaren Möbelteil 2 die Ausziehschiene 5, wobei das Betätigungselement 13 wieder freigegeben werden kann, sobald die Ausziehschiene 5 aus ihrer Einschubposition gebracht worden ist. Eine Zwischenstellung des ausziehbaren Möbelteils 2 und der Ausziehführung ist in den Fig. 11 - 14 dargestellt. Bei freigegebenem Betätigungselement 13 wird das Riegelteil 10 vom Federelement 12, wenn die Ausziehschiene 5 eine Zwischenstellung zwischen der Einschubposition und der Ausziehposition einnimmt, an eine Laufbahn 23 der Korpusschiene 3 angedrückt. Diese Laufbahn 23 verläuft parallel zur Ausziehrichtung 7. Beim Verschieben der Ausziehschiene 5 gegenüber der Korpusschiene 3 gleitet das Riegelteil 10 mit seiner an die Laufbahn 23 angedrückten Stirnfläche entlang der Laufbahn 23.

Das Riegelteil 10 weist hierzu günstigerweise einen Gleitschuh 10a auf, der auf einen Grundkörper 10b des Riegelteils 10 aufgeschoben ist.

Wenn durch das weitere Ausziehen des ausziehbaren Möbelteils 2 die Ausziehschiene 5 die Ausziehposition erreicht, so ist das Riegelteil 10 über das Ende der Laufbahn 23 hinaus gelangt und durch die Kraft des Federelements 12 in seine Sperrstellung verschoben worden, in welcher es mit der zweiten Anschlagfläche 15 zusammenwirkt, vgl. Fig. 15 -18.

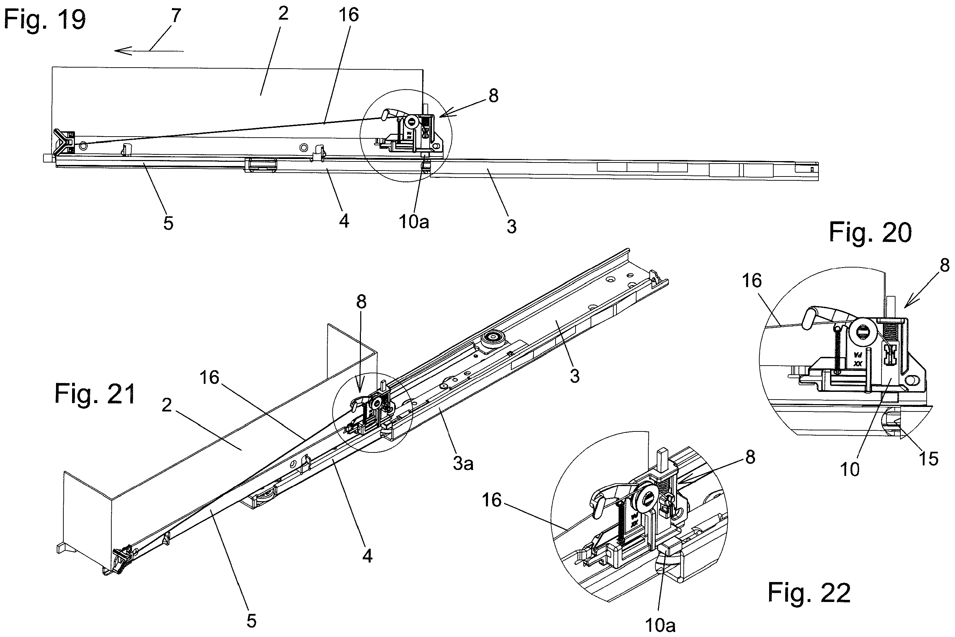

Um das ausziehbare Möbelteil 2 ausgehend von seiner maximal ausgezogenen Position, in der sich die Ausziehschiene 5 in ihrer Ausziehposition befindet, wieder einzuschieben, wird das Riegelteil 10 mittels des Betätigungselements 13 von der Sperrstellung in die Freigabestellung verschoben, in welcher es außer Eingriff mit der zweiten Anschlagfläche 15 gelangt, vgl. Fig. 19 -22. In der Folge kann das ausziehbare Möbelteil und mit diesem die Ausziehschiene 5 entgegen der Ausziehrichtung 7 eingeschoben werden. Wenn die Ausziehschiene 5 die Einschubposition erreicht, so ist das Riegelteil 10 über das Ende der Laufbahn 23 hinausgelangt und durch die Kraft des Federelements 12 in seine Sperrstellung verschoben worden, in welcher es mit der ersten Anschlagfläche 14 zusammenwirkt, vgl. Fig. 1-6.

Zwischen der Laufbahn 23 und der ersten Anschlagfläche 14 sowie zwischen der Laufbahn 23 und der zweiten Anschlagfläche 15 befindet sich im Ausführungsbeispiel jeweils eine Abwinkelung (=Kante). Stattdessen könnte sich zwischen der Laufbahn 23 und der ersten Anschlagfläche 14 und/oder zwischen der Laufbahn 23 und der zweiten Anschlagfläche 15 eine Abrundung befinden. Es würde dann durch das Federelement 12 kurz vor Erreichen der Ausziehstellung der Ausziehschiene 5 (beim Ausziehen der Ausziehführung) bzw. der Einschubposition der Ausziehschiene 5 (beim Einschieben der Ausziehführung) eine in die Ausziehrichtung 7 (beim Ausziehen) bzw. entgegen der Ausziehrichtung 7 (beim Einschieben) wirkende Kraft hervorgerufen von welcher jeweils die Ausziehschiene 5 in ihre Endposition verschoben werden könnte.

Das Basisteil 9 der Riegeleinheit 8 weist eine nutförmige Vertiefung auf, in welcher der Grundkörper 10b des Riegelteils 10 parallel zur Verschieberichtung 11 verschiebbar gelagert ist.

Der Grundkörper 10b, welcher vorzugsweise aus Metall besteht, besitzt eine Fensteröffnung 10c, in welche ein Verbindungsteil 17 eingeclipst ist. Dieses weist einen Hohlraum auf, in welches ein endseitig am Zugseil 16 angebrachtes Endstück 27 zur Verbindung des Zugseils 16 mit dem Riegelteil 10 einsetzbar ist.

Statt der im Ausführungsbeispiel vorgesehenen Schraubenfeder könnte auch ein anderes Federelement 12 zur Beaufschlagung des Riegelteils 10 in dessen Sperrstellung vorgesehen sein.

Die erste und/oder zweite Anschlagfläche könnte auch an einem an der Korpusschiene 3 angebrachten Teil ausgebildet sein.

Im Ausführungsbeispiel wird sowohl das Ausziehen der Ausziehführung als auch das Einschieben der Ausziehführung gesperrt. Stattdessen könnte nur das Ausziehen der Ausziehführung oder nur das Einschieben der Ausziehführung gesperrt werden. In der nicht gesperrten Endposition der Ausziehschiene würde dann das Riegelteil 10 nach wie vor an der Laufbahn 23 anliegen.

Die auf beiden Seiten des ausziehbaren Möbelteils 2 angeordneten Schienen könnten jeweils mit einer beschriebenen Verriegelungsvorrichtung ausgebildet sein. Die mit den Riegelteilen 10 der beiden Riegeleinheiten 8 verbundenen Zugseile 16 könnten dann zusammengeführt werden und mit einem gemeinsamen Betätigungselement 13 verbunden werden. Zur Zusammenführung zweier solcher Zugseile 16 ist das in den Figuren dargestellte Umlenkteil 19 geeignet.

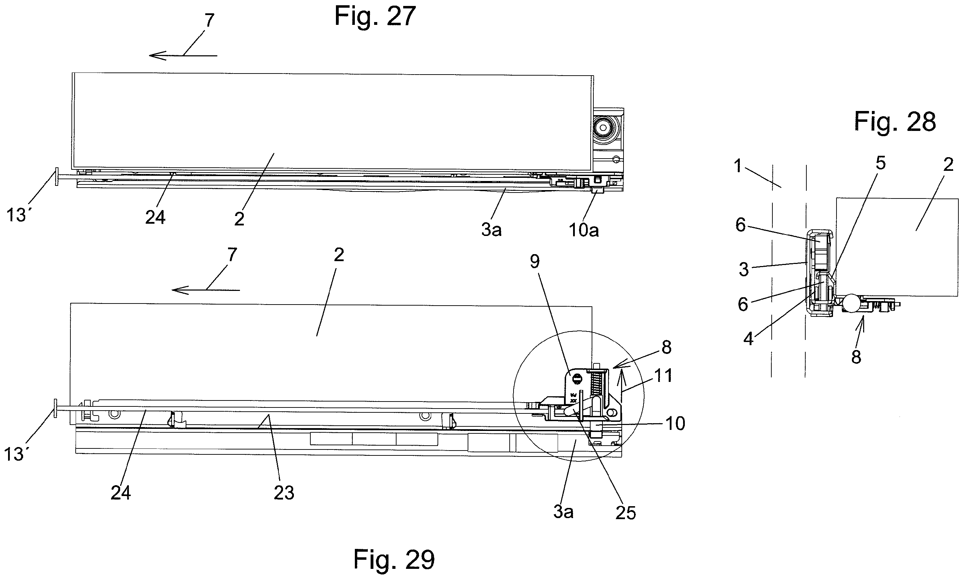

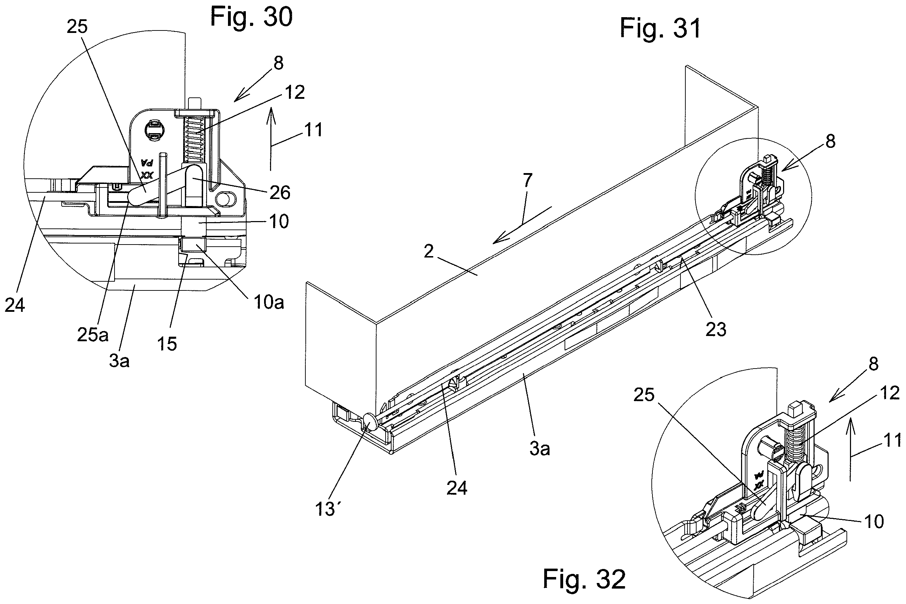

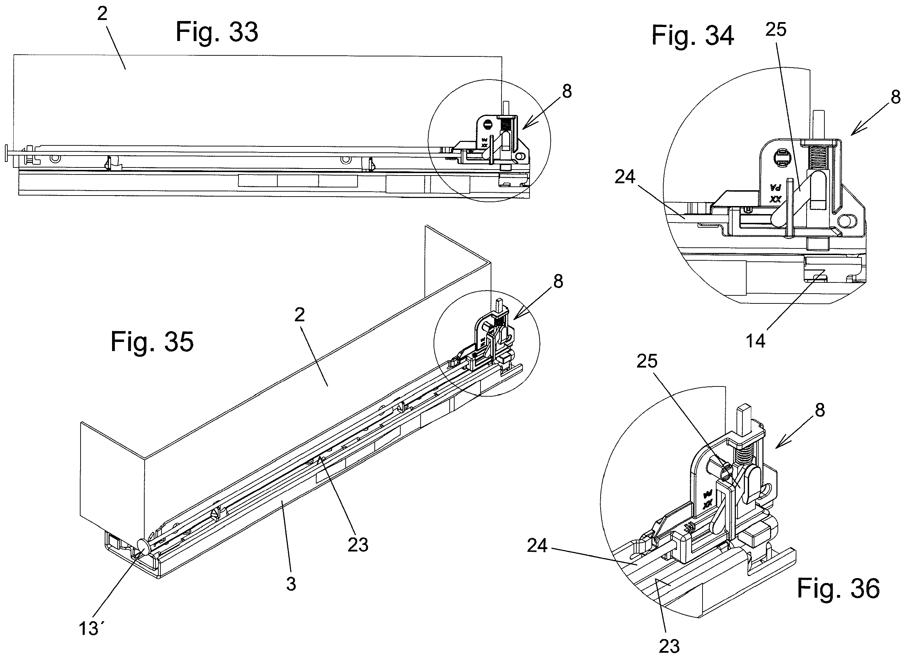

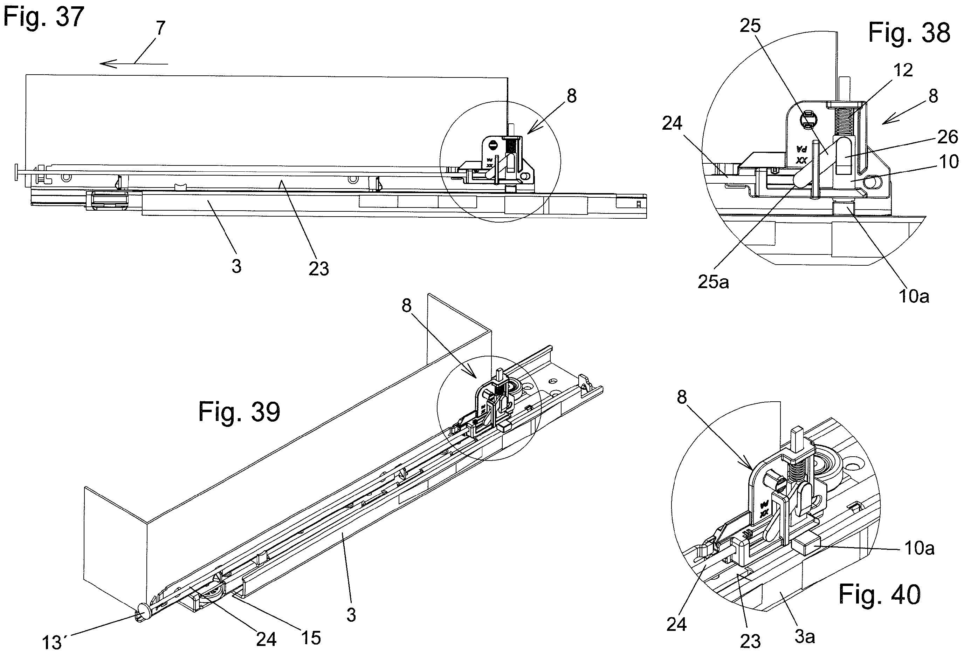

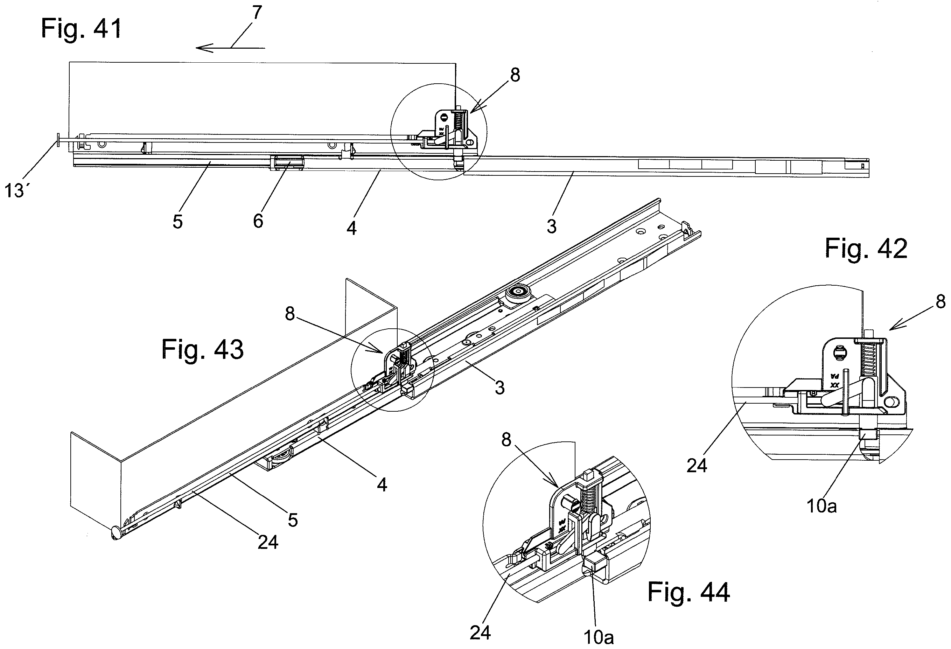

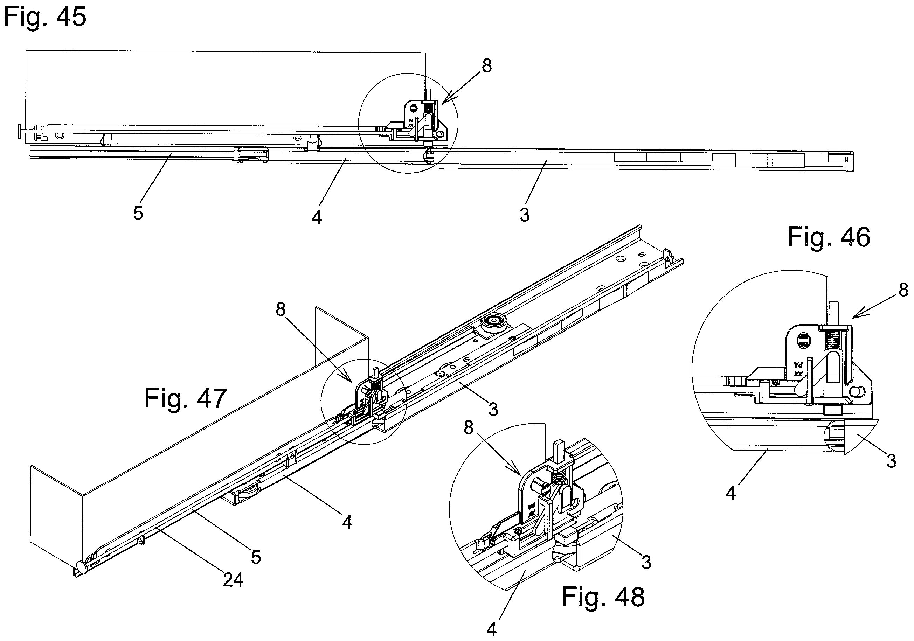

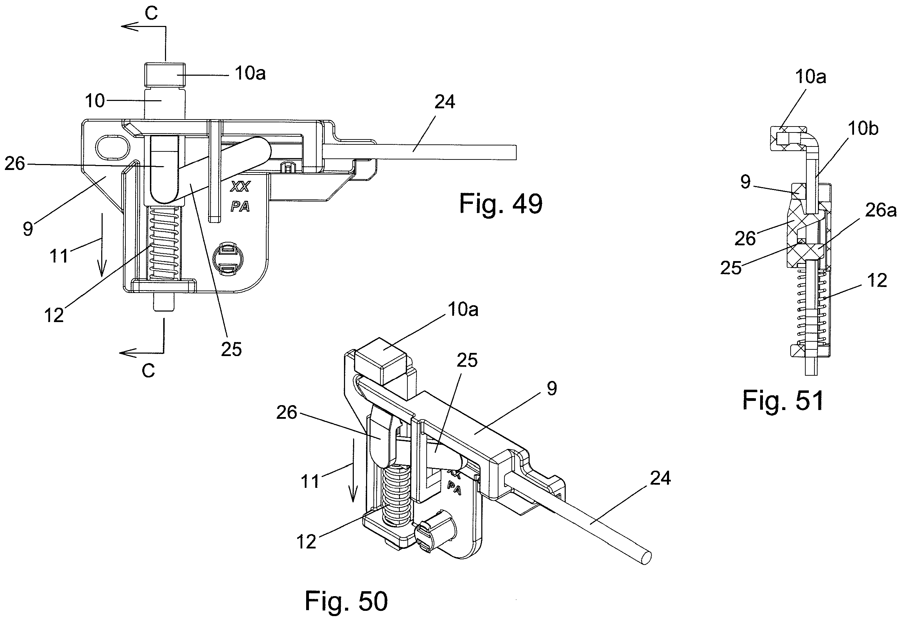

Ein zweites Ausführungsbeispiel der Erfindung ist in den Fig. 27-53 dargestellt. Abgesehen von den im Folgenden beschriebenen Unterschieden entspricht die Ausbildung dem ersten Ausführungsbeispiel und die Beschreibung des ersten Ausführungsbeispiels trifft in analoger Weise zu, zusammen mit den beschriebenen möglichen Modifikationen. Für entsprechende Teile wurden die gleichen Bezugszeichen verwendet.

Der Unterschied des zweiten Ausführungsbeispiels gegenüber dem ersten Ausführungsbeispiel besteht in der Betätigung des Riegelteils 10. Zur Verbindung zwischen dem Betätigungselement 13' und dem Riegelteil 10 dient hier eine Betätigungsstange 24 und ein Getriebeglied 25. Um das Riegelteil 10 zwischen seiner Sperrstellung und seiner Freigabestellung zu verschieben, wird das Betätigungselement 13' eingedrückt und somit die Betätigungsstange 24 in Richtung zum Riegelteil 10 verschoben. Das Getriebeglied 25 ist als winkelig zur Verschieberichtung 11 stehender Übertragungsarm ausgebildet, von dem ein erstes Ende 25a mit der Betätigungsstange 24 in Verbindung steht und ein zweites Ende 25b mit dem Riegelteil 10 in Verbindung steht. Das Getriebeglied 25 ist hierbei sowohl gegenüber der Betätigungsstange 24 als auch gegenüber dem Riegelteil 10 verschwenkbar, und zwar um eine jeweilige Achse, die rechtwinkelig zur Ausziehrichtung 7 und rechtwinkelig zur Verschieberichtung 11 steht.

Im Ausführungsbeispiel ist das zweite Ende 25b des Getriebeglieds 25 über ein Verbindungsteil 26 am Riegelteil 10 angelenkt. Das Verbindungsteil 26 weist hierbei einen Gelenkzapfen 26a auf, der eine Öffnung 25c im Getriebeglied 25 durchsetzt, und ist mittels eines Rastarms 26b in eine Fensteröffnung 10c des Riegelteils 10 eingeclipst.

Das erste Ende 25a des Getriebeglieds 25 weist einen Führungszapfen 25d auf, der in einer Führungsnut 9a des Basisteils 9 verschiebbar und verschwenkbar geführt ist. Ein Ende der Betätigungsstange 24 liegt am ersten Ende 25a des Getriebeglieds 25 an.

Statt des beschriebenen Getriebeglieds 25 könnte auch ein anders Getriebeglied vorgesehen sein, beispielsweise ein Keilelement, welches eine mit dem Riegelteil 10 zusammenwirkende Schrägfläche aufweist.

Anstelle eines Eindrückens der Betätigungsstange 24 zum Verstellen des Riegelteils 10 von seiner Sperrstellung in seine Freigabestellung könnte auch ein Herausziehen der Betätigungsstange 24 vorgesehen sein. Ein Eindrücken oder Herausziehen der Betätigungsstange 24 könnte beispielsweise auch mittels eines verschwenkbar an der Ausziehschiene 5 oder am ausziehbaren Möbelteil 2 gelagerten Betätigungselements bewirkt werden.

Im ersten und zweiten Ausführungsbeispiel sind das Basisteil 9 und das Riegelteil 10 identisch ausgebildet. Die Verriegelungsvorrichtung kann somit in einfacher Weise wahlweise mit der Verwendung eines Zugseils 16 entsprechend dem ersten Ausführungsbeispiel und der Verwendung einer Betätigungsstange 24 entsprechend dem zweiten Ausführungsbeispiel ausgerüstet werden.

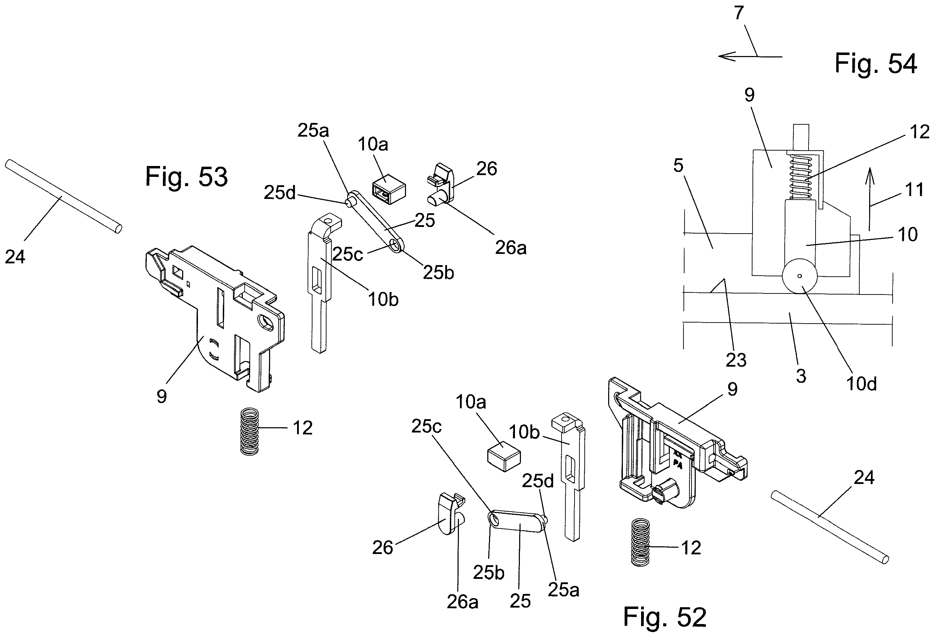

Fig. 54 zeigt schematisch ein mit einer drehbar gelagerten Rolle 10d ausgerüstetes Riegelteil 10, welches beim Ausziehen und Einschieben der Ausziehschiene 5 entlang der Laufbahn 23 abrollt. Ein solches eine drehbare gelagerte Rolle 10d aufweisendes Riegelteil 10 kann sowohl im ersten als auch im zweiten Ausführungsbeispiel eingesetzt werden. Das Riegelteil 10 betätigende Elemente, wie ein Zugseil 16 oder eine Betätigungsstange 24 sind in der schematischen Fig. 54 der Einfachheit halber weggelassen.

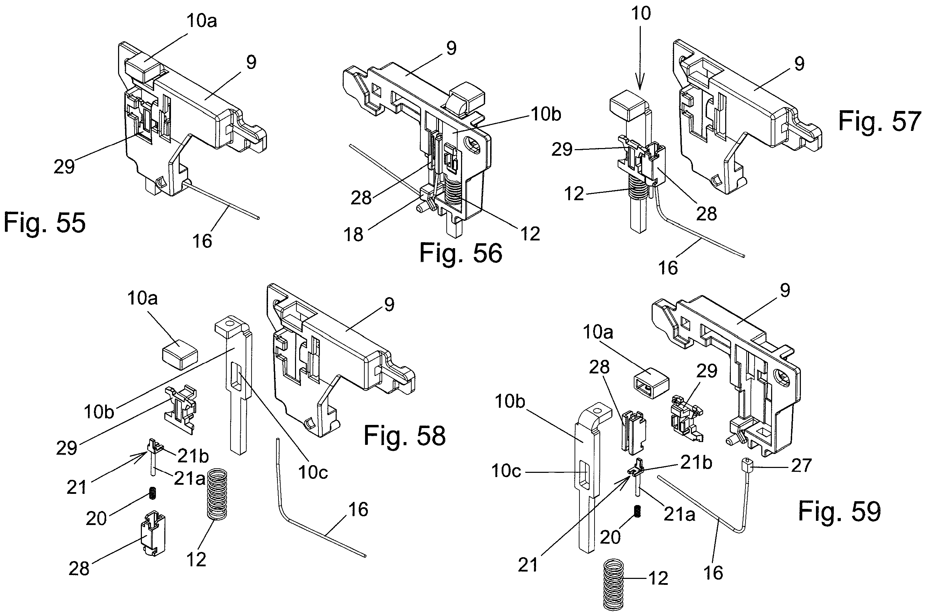

Eine modifizierte Ausbildung der Riegeleinheit 8, welche anstelle der im Zusammenhang mit dem ersten Ausführungsbeispiel beschriebenen Riegeleinheit einsetzbar ist, ist in den Fig. 55-64 dargestellt. Abgesehen von den im Folgenden beschriebenen Unterschieden entspricht die Ausbildung derjenigen des ersten Ausführungsbeispiels. Für gleiche bzw. zumindest analoge Teile werden die gleichen Bezugszeichen wie im ersten Ausführungsbeispiel verwendet.

Der wesentliche Unterschied dieser modifzierten Ausbildungform besteht in der Art des Spannens des Zugseils 16. Zu diesem Zweck ist hier ein linear verschiebbares Spannteil 21 vorgesehen. Das Spannteil 21 ist gegenüber dem Riegelteil 9 parallel zur Verschieberichtung 11 verschiebbar gelagert, wobei das Riegelteil 10 wiederum gegenüber dem (etwas modifiziert ausgebildeten) Basisteil 9 in die Verschieberichtung 11 linear verschiebbar gelagert ist.

Die verschiebbare Lagerung des Spannteils 21 durch das Riegelteil 10 erfolgt mittels eines Lagerteils 28, welches über ein Verbindungsteil 29 mit dem Grundkörper 10b des Riegelteils 10 verbunden ist. Das Lagerteil 28 besitzt eine innere Ausdehnung, in welche das Spannteil 21 eingesetzt ist und verschiebbar gelagert ist. Zwischen dem Spannteil 21 und einem Boden 28a des Lagerteils 28 befindet sich eine Spannfeder 20, welche als Schraubenfeder ausgebildet ist und einen stiftartigen Fortsatz 21a des Spannteils 21 umgibt. Das Endstück 27 des Zugseils 16 (fehlt in Fig. 58) liegt auf einem Boden 21b des Spannteils 21 auf, wobei das Zugseil 16 einen Schlitz im Boden 21b durchsetzt.

Das Zugseil 16 verläuft ausgehend vom Spannteil 21 in eine Richtung parallel zur Verschieberichtung 11 und wird dann von einem hier einstückig mit dem Basisteil 9 ausgebildeten Umlenkteil 18 in eine Richtung umgelenkt, die im Ausführungsbeispiel mit der Ausziehrichtung einen Winkel von weniger als 30° einschließt, wobei auch größere Winkel möglich sind.

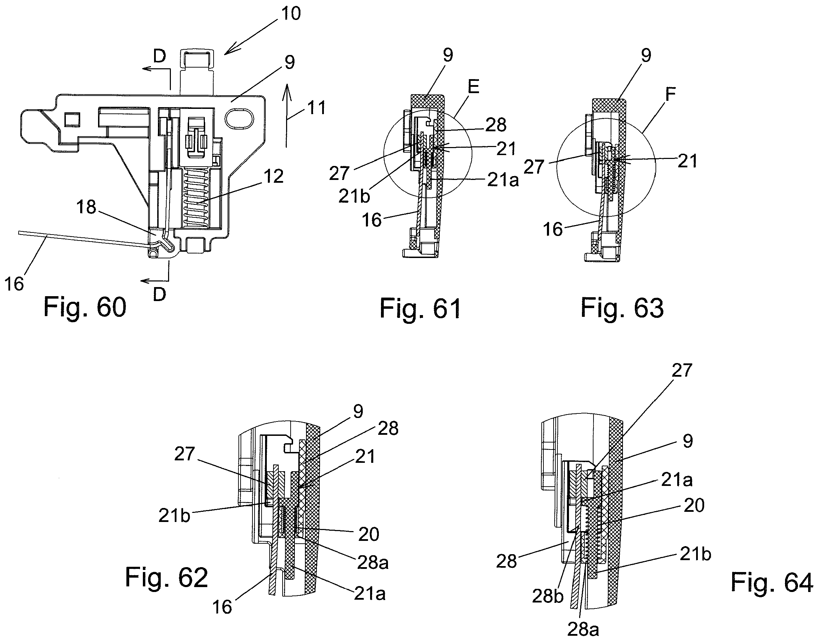

Beim Verstellen des Riegelteils 10 von seiner Sperrstellung in seine Freigabestellung durch einen vom Betätigungselement 13 auf das Zugseil 16 ausgeübten Zug ist das Spannteil 21 maximal in Richtung zum Boden 28a des Lagerteils 28 verschoben, vgl. Fig. 61 und 62. Das Spannteil 21 liegt in diesem Zustand an einer Anschlagfläche 28b des Lagerteils 28 an. Alternativ könnte auch die Spannfeder 20 auf Block gespannt sein.

Wenn beim Ausziehen oder Einschieben der Ausziehschiene 5 das Riegelteil 10 an der Laufbahn 23 anliegt und entlang dieser gleitet (oder abrollt), vgl. Fig. 11 bis 14, so wird das Spannteil 21 von der Spannfeder 20 so weit verschoben, dass das Zugseil 16 gespannt bleibt, vgl. Fig. 63 und 64.

Das Riegelteil könnte auch in unterschiedlicher Weise ausgebildet sein, um ein Spannteil 21 verschiebbar zu lagern, wobei eine Spannfeder das Spannteil 21 beaufschlagt. So könnten das Verbindungsteil 29 und das Lagerteil 28 auch entfallen und die das Spannteil 21 lagernden Elemente auch einstückig mit einem (metallischen) Grundkörper des Riegelteils ausgebildet sein. Im gezeigten Ausführungsbeispiel sind das Verbindunsgteil 29 und das Lagerteil 28 aus Kunststoff ausgebildet und über Clipsverbindungen aneinander und am Grundkörper 10b befestigt.

Das Spannteil 21 könnte auch winkelig zur Verschieberichtung 11 gegenüber dem Riegelteil 10 verschiebbar gelagert sein (wobei dieser Winkel vorzugsweise kleiner als 30° wäre) und/oder das Zugseil 16 könnte vom Spannteil 21 auch in eine Richtung winkelig zur Verschieberichtung 11 ausgehen, wobei der Winkel zwischen der Richtung der verschiebbaren Lagerung des Spannteils 11 und dem Zugseil 16 anschließend an das Spannteil 21 vorzugsweise kleiner als 30° wäre.

Denkbar und möglich wäre es auch ein auf das Zugseil 16 einwirkendes Spannteil am Basisteil 9 der Riegeleinheit 8 unter Beaufschlagung einer Spannfeder verschiebbar zu lagern (parallel zur Verschieberichtung 11 oder unter einem Winkel hierzu, der vorzugsweise weniger als 30° beträgt).

**Legende zu den Hinweisziffern:**

| | | | |
|---|---|---|---|
| 1 | Möbelkorpus | 18 | Umlenkteil |
| 2 | ausziehbares Möbelteil | 19 | Umlenkteil |
| 3 | Korpusschiene | 20 | Spannfeder |
| 3a | Horizontalschenkel | 21 | Spannteil |
| 4 | Mittelschiene | 21a | Fortsatz |
| 5 | Ausziehschiene | 21b | Boden |
| 6 | Laufrolle | 22 | Schwenkachse |
| 7 | Ausziehrichtung | 23 | Laufbahn |
| 8 | Riegeleinheit | 24 | Betätigungsstange |
| 9 | Basisteil | 25 | Getriebeglied |
| 9a | Führungsnut | 25a | erstes Ende |
| 10 | Riegelteil | 25b | zweites Ende |
| 10a | Gleitschuh | 25c | Öffnung |
| 10b | Grundkörper | 25d | Führungszapfen |
| 10c | Fensteröffnung | 26 | Verbindungsteil |
| 10d | Rolle | 26a | Gelenkzapfen |
| 11 | Verschieberichtung | 26b | Rastarm |
| 12 | Federelement | 27 | Endstück |
| 13, 13' | Betätigungselement | 28 | Lagerteil |
| 14 | erste Anschlagfläche | 28a | Boden |
| 15 | zweite Anschlagfläche | 28b | Anschlagfläche |
| 16 | Zugseil | 29 | Verbindungsteil |
| 17 | Verbindungsteil | | |

## Patentansprüche

1. Ausziehführung für ein aus einem Möbelkorpus (1) ausziehbares Möbelteil (2), umfassend eine am Möbelkorpus (1) anbringbare Korpusschiene (3), eine am ausziehbaren Möbelteil (2) anbringbare Ausziehschiene (5), welche ausgehend von einer vollständig eingeschobenen Einschubposition in eine Ausziehrichtung (7) in eine vollständig ausgezogene Ausziehposition ausziehbar ist und entgegen der Ausziehrichtung (7) von der Ausziehposition in die Einschubposition einschiebbar ist, und ein Riegelteil (10) zum Sperren des Ausziehens der Ausziehschiene ausgehend von der Einschubposition der Ausziehschiene (5) und des Einschiebens der Ausziehschiene (5) ausgehend von der Ausziehposition der Ausziehschiene (5), wobei das Riegelteil (10) mittels eines Betätigungselements (13, 13') von einer Sperrstellung, in welcher das Riegelteil (10) das Ausziehen der Ausziehschiene (5) ausgehend von der Einschubposition der Ausziehschiene (5) und das Einschieben der Ausziehschiene (5) ausgehend von der Ausziehposition der Ausziehschiene (5) sperrt, in eine Freigabestellung verstellbar ist, in welcher das Riegelteil (10) das Ausziehen der Ausziehschiene (5) ausgehend von der Einschubposition der Ausziehschiene (5) und das Einschieben der Ausziehschiene (5) ausgehend von der Ausziehposition der Ausziehschiene (5) freigibt, und das Riegelteil (10) in der Einschubposition der Ausziehschiene (5) und in der Ausziehposition der Ausziehschiene (5) von einem Federelement (12) in der Sperrstellung gehalten ist und durch eine Betätigung des Betätigungselements (13, 13') gegen die Federkraft des Federelements (12) von der Sperrstellung in die Freigabestellung verstellbar ist und das Riegelteil (10) beim Ausziehen und Einschieben der Ausziehschiene (5) entlang einer Laufbahn (23) der Korpusschiene (3) gleitet oder abrollt, wobei das Riegelteil (10) vom Federelement (12) an die Laufbahn (23) angedrückt ist, **dadurch gekennzeichnet, dass** das Riegelteil (10) von einem Basisteil (9) parallel zu einer Verschieberichtung (11) verschiebbar geführt ist und durch die Betätigung des Betätigungselements (13, 13') gegen die Federkraft des Federelements (12) von der Sperrstellung in die Freigabestellung in die Verschieberichtung (11) verschiebbar ist, und dass das Betätigungselement (13) über ein Zugseil (16) mit dem Riegelteil (10) verbunden ist, wobei ein von einer Spannfeder (20) beaufschlagtes Spannteil (21) auf das Zugseil (16) einwirkt und dieses gespannt hält, oder das Betätigungselement (13') über eine axial verschiebbare Betätigungsstange (24) und mindestens ein Getriebeglied (25) mit dem Riegelteil (10) verbunden ist.

2. Ausziehführung nach Anspruch 1, **dadurch gekennzeichnet, dass** das Spannteil (21) als um eine Schwenkachse (22) verschwenkbar gelagerter Hebel ausgebildet ist, der im Bereich seines freien Endes von der Spannfeder (20) an das Zugseil (16) angedrückt ist.

3. Ausziehführung nach Anspruch 2, **dadurch gekennzeichnet, dass** das Spannteil (21) vom Riegelteil (10) parallel zur Verschieberichtung (11) linear verschiebbar gelagert ist und mit einem Endstück (27) des Zugseils (16) zusammenwirkt.

4. Ausziehführung nach Anspruch 1, **dadurch gekennzeichnet, dass** das Getriebeglied (25) ein Übertragungsarm ist, dessen erstes Ende (25a) mit der Betätigungsstange (24) zusammenwirkt und von der Betätigungsstange (24) verschiebbar ist und von dessen zweitem Ende (25b) das Riegelteil (10) gegen die Kraft des Federelements (12) von der Sperrstellung in die Freigabestellung verschiebbar ist, wobei der Übertragungsarm winkelig zur Betätigungsstange (24) und winkelig zur Verschieberichtung (11) des Riegelteils (10) ausgerichtet ist und gegenüber der Betätigungsstange (24) sowie gegenüber dem Riegelteil (10) verschwenkbar ist.

5. Ausziehführung nach einem der Ansprüche 1 bis 4, **dadurch gekennzeichnet, dass** die Verschieberichtung (11) rechtwinkelig zur Ausziehrichtung (7) steht.

6. Ausziehführung nach einem der Ansprüche 1 bis 5, **dadurch gekennzeichnet, dass** die Verschieberichtung (11) im Montagezustand der Ausziehführung horizontal liegt.

7. Ausziehführung nach Anspruch 6, **dadurch gekennzeichnet, dass** das Zugseil (16), über welches das Betätigungselement (13) mit dem Riegelteil (10) verbunden ist, über ein am Basisteil (9) angeordnetes Umlenkteil (18) geführt ist.

8. Ausziehführung nach Anspruch 7, **dadurch gekennzeichnet, dass** das Umlenkteil (18) eine am Basisteil (9) drehbar gelagerte Umlenkrolle ist.

9. Ausziehführung nach einem der Ansprüche 1 bis 8, **dadurch gekennzeichnet, dass** das Riegelteil (10) in der Sperrstellung mit einer an der Korpusschiene (3) angeordneten Anschlagfläche (14, 15) zusammenwirkt.

10. Ausziehführung nach Anspruch 9, **dadurch gekennzeichnet, dass** die Anschlagfläche (14, 15) rechtwinkelig zur Ausziehrichtung (7) steht.

11. Ausziehführung nach einem der Ansprüche 1 bis 10, **dadurch gekennzeichnet, dass** die Laufbahn (23) entlang der Korpusschiene (3) parallel zur Ausziehrichtung (7) verläuft.

## Claims

1. A pull-out guide for a furniture part (2) able to be pulled out of a furniture carcass (1), comprising a carcass rail (3), attachable to the furniture carcass (1), a pull-out rail (5), attachable to the furniture part (2) able to be pulled out, which starting from a completely pushed-in insertion position can be pulled out in a pull-out direction (7) into a fully pulled-out pull-out position and counter to the pull-out direction (7) can be pushed in from the pull-out position into the insertion position, and a bolt part (10) for blocking the pulling out of the pull-out rail starting from the insertion position of the pull-out rail (5) and the pushing in of the pull-out rail (5) starting from the pull-out position of the pull-out rail (5), wherein the bolt part (10) is adjustable by means of an actuating element (13, 13') from a blocking position, in which the bolt part (10) blocks the pulling out of the pull-out rail (5) starting from the insertion position of the pull-out rail (5) and the pushing in of the pull-out rail (5) starting from the pull-out position of the pull-out rail (5), into a release position, in which the bolt part (10) releases the pulling out of the pull-out rail (5) starting from the insertion position of the pull-out rail (5) and the pushing in of the pull-out rail (5) starting from the pull-out position of the pull-out rail (5), and, in the insertion position of the pull-out rail (5) and in the pull-out position of the pull-out rail (5), the bolt part (10) is held in the blocking position by a spring element (12) and through an actuation of the actuating element (13, 13') is adjustable from the blocking position into the release position against the spring force of the spring element (12) and the bolt part (10) slides or rolls along a track (23) of the carcass rail (3) upon pulling out and pushing in of the pull-out rail (5), wherein the bolt part (10) is pressed against the track (23) by the spring element (12), **characterised in that** the bolt part (10) is displaceably guided parallel to a displacement direction (11) by a base part (9) and through the actuation of the actuating element (13, 13') is displaceable in the displacement direction (11) from the blocking position into the release position against the spring force of the spring element (12), and **in that** the actuating element (13) is connected to the bolt part (10) via a traction cable (16), wherein a tensioning part (21) acted upon by a tension spring (20) acts upon the traction cable (16) and keeps it tensioned, or the actuating element (13') is connected to the bolt part (10) via an axially displaceable actuating rod (24) and at least one linkage member (25).

2. A pull-out guide according to claim 1, **characterised in that** the tensioning part (21) is in the form of a lever, pivotably mounted about a pivot axis (22), which in the region of its free end is pressed against the traction cable (16) by the tension spring (20).

3. A pull-out guide according to claim 2, **characterised in that** the tensioning part (21) is mounted in a linearly displaceable manner parallel to the displacement direction (11) by the lock part (10) and cooperates with an end piece (27) of the traction cable (16).

4. A pull-out guide according to claim 1, **characterised in that** the linkage member (25) is a transfer arm whose first end (25a) cooperates with the actuating rod (24) and is displaceable by the actuating rod (24) and whose second end (25b) can displace the lock part (10) from the blocking position into the release position against the force of the spring element (12), wherein the transfer arm is oriented at an angle to the actuating rod (24) and at an angle to the displacement direction (11) of the lock part (10) and is pivotable in relation to the actuating rod (24) as well as in relation to the lock part (10).

5. A pull-out guide according to any one of claims 1 to 4, **characterised in that** the displacement direction (11) is at right angles to the pull-out direction (7).

6. A pull-out guide according to any one of claims 1 to 5, **characterised in that** the displacement direction (11) lies horizontally in the assembly state of the pull-out guide.

7. A pull-out guide according to claim 6, **characterised in that** the traction cable (16), via which the actuating element (13) is connected to the lock part (10), is guided via a deflection part (18) arranged on the base part (9).

8. A pull-out guide according to claim 7, **characterised in that** the deflection part (18) is a deflection roller rotatably mounted on the base part (9).

9. A pull-out guide according to any one of claims 1 to 8, **characterised in that** the lock part (10) cooperates with a stop surface (14, 15), arranged at the carcass rail (3), in the blocking position.

10. A pull-out guide according to claim 9, **characterised in that** the stop surface (14, 15) is at right angles to the pull-out direction (7).

11. A pull-out guide according to any one of claims 1 to 10, **characterised in that** the track (23) runs along the carcass rail (3), parallel to the pull-out direction (7).

## Revendications

1. Guide de sortie pour une partie de meuble (2) pouvant être sortie d'un corps de meuble (1), comprenant un rail de corps (3) pouvant être fixé au corps de meuble (1), un rail de sortie (5) pouvant être fixé à la partie de meuble (2) pouvant être sortie, lequel rail de sortie, partant d'une position rentrée complètement poussée, peut être tiré dans une direction de sortie (7) jusqu'à une position de sortie complètement sortie et, partant de la position de sortie, peut être repoussé en direction opposée à la direction de sortie (7) jusqu'à la position rentrée, et une pièce de verrouillage (10) pour bloquer la sortie du rail de sortie depuis la position rentrée du rail de sortie (5) et la poussée du rail de sortie (5) depuis la position de sortie du rail de sortie (5), la pièce de verrouillage (10) pouvant être déplacée au moyen d'un élément d'actionnement (13, 13') depuis une position de blocage, dans laquelle la pièce de verrouillage (10) bloque la sortie du rail de sortie (5) depuis la position rentrée du rail de sortie (5) et la poussée du rail de sortie (5) depuis la position de sortie du rail de sortie (5), dans une position de libération dans laquelle la pièce de verrouillage (10) libère la sortie du rail de sortie (5) depuis la position rentrée du rail de sortie (5) et la poussée du rail de sortie (5) depuis la position de sortie du rail de sortie (5), et la pièce de verrouillage (10) étant maintenue en position de verrouillage par un élément ressort (12) dans la position rentrée du rail de sortie (5) et dans la position de sortie du rail de sortie (5), et pouvant être déplacée depuis la position de blocage dans la position de libération par l'actionnement de l'élément d'actionnement (13, 13') contre la force de ressort de l'élément ressort (12), et la pièce de verrouillage (10) glissant ou roulant le long d'une piste (23) du rail de corps (3) lors de la sortie et la poussée du rail de sortie (5), la pièce de verrouillage (10) étant pressée contre la piste (23) par l'élément ressort (12), **caractérisé en ce que** la pièce de verrouillage (10) est guidée de façon mobile parallèlement à une direction de déplacement (11) par une pièce de base (9) et peut être déplacée dans la direction de déplacement (11) depuis la position de verrouillage dans la position de libération par l'actionnement de l'élément d'actionnement (13, 13') contre la force de ressort de l'élément ressort (12), et **en ce que** l'élément d'actionnement (13) est relié à la pièce de verrouillage (10) par l'intermédiaire d'un câble de traction (16), une pièce de tension (21) sur laquelle agit un ressort de tension (20) agissant sur le câble de traction (16) et maintenant ce dernier sous tension, ou l'élément d'actionnement (13') étant relié à la pièce de verrouillage (10) par l'intermédiaire d'une tige d'actionnement (24) déplaçable axialement et d'au moins un élément de transmission (25).

2. Guide de sortie selon la revendication 1, **caractérisé en ce que** la pièce de tension (21) est conçue sous la forme d'un levier monté pivotant autour d'un axe de pivotement (22) et pressé par le ressort de tension (20) contre le câble de traction (16) au niveau de son extrémité libre.

3. Guide de sortie selon la revendication 2, **caractérisé en ce que** la pièce de tension (21) est logée déplaçable linéairement parallèlement à la direction de déplacement (11) par la pièce de verrouillage (10), et coopère avec un embout (27) du câble de traction (16).

4. Guide de sortie selon la revendication 1, **caractérisé en ce que** l'élément de transmission (25) est un bras de transmission, dont la première extrémité (25a) coopère avec la tige d'actionnement (24) et peut être déplacée par la tige d'actionnement (24), et dont la seconde extrémité (25b) peut déplacer la pièce de verrouillage (10) à l'encontre de la force de l'élément ressort (12) depuis la position de verrouillage dans la position de libération, le bras de transmission formant un angle par rapport à la tige d'actionnement (24) et un angle par rapport à la direction de déplacement (11) de la pièce de verrouillage (10), et pouvant être pivoté par rapport à la tige d'actionnement (24) et par rapport à la pièce de verrouillage (10).

5. Guide de sortie selon l'une des revendications 1 à 4, **caractérisé en ce que** la direction de déplacement (11) est perpendiculaire à la direction de sortie (7).

6. Guide de sortie selon l'une des revendications 1 à 5, **caractérisé en ce que** la direction de déplacement (11) est horizontale à l'état monté du guide de sortie.

7. Guide de sortie selon la revendication 6, **caractérisé en ce que** le câble de traction (16), par lequel l'élément d'actionnement (13) est relié à la pièce de verrouillage (10), est guidé par une pièce de déviation (18) disposée sur la pièce de base (9).

8. Guide de sortie selon la revendication 7, **caractérisé en ce que** la pièce de déviation (18) est un rouleau de déviation monté rotatif sur la pièce de base (9).

9. Guide de sortie selon l'une des revendications 1 à 8, **caractérisé en ce que,** en position verrouillée, la pièce de verrouillage (10) coopère avec une surface de butée (14, 15) disposée sur le rail de corps (3).

10. Guide de sortie selon la revendication 9, **caractérisé en ce que** la surface de butée (14, 15) est à angle droit par rapport à la direction de sortie (7).

11. Guide de sortie selon l'une des revendications 1 à 10, **caractérisé en ce que** la piste (23) s'étend le long du rail de corps (3) parallèlement à la direction de sortie (7).
